# EUROPÄISCHE PATENTSCHRIFT

(11) **EP 1 474 961 B1**
(45) Veröffentlichungstag und Bekanntmachung des Hinweises auf die Patenterteilung: **22.11.2006**
(21) Anmeldenummer: 04100481.3
(22) Anmeldetag: 10.02.2004
(51) Int. Cl.: A01B 35/22

(54) **Halteeinrichtung**
Securing device
Dispositif de fixation

(30) Priorität: 30.04.2003 US 426779
(43) Veröffentlichungstag der Anmeldung: 10.11.2004
(73) Patentinhaber: DEERE & COMPANY, Moline, Illinois 61265-8098 (US)
(72) Erfinder: Peck, Donald Ray, Clive, IA Iowa 50325 (US); Poutré, Benoit Jocelyn, Elkhart, IA Iowa 50073 (US); Beeck, Mark Donald, Ankeny, IA Iowa 50021 (US)
(74) Vertreter: Holst, Sönke

(56) Entgegenhaltungen:
- EP-A- 1 304 024
- US-A- 1 132 335
- US-A- 4 638 868
- US-A- 5 711 378
- US-B1- 6 289 996
- US-B1- 6 684 963

## Beschreibung

Die Erfindung betrifft eine Kombination aus Halteeinrichtung und Aufsteckwerkzeug, mit einem Verbindungsteil an der Halteeinrichtung, welches keilförmig zusammenlaufende Seiten aufweist, und mit einem auf das Verbindungsteil aufsteckbaren wenigstens teilweise die Seiten des Verbindungsteils umschließenden Aufsteckbereich am Aufsteckwerkzeug, wobei die Seiten jeweils mit einer ersten und einer zweiten Oberfläche versehen sind, welche in der Längsrichtung der zusammenlaufenden Seiten des schmaleren Endbereichs des Verbindungsteils konvergieren.

Eine solche Kombination ist aus EP-A-1304024 bekannt.

Bei den meisten erhältlichen Bodenbearbeitungswerkzeugen mit Schnellwechselsystemen war ein funktionsgerechtes Zusammenfügen eines Schars mit einem Adapter stets mit Schwierigkeiten verbunden. Das Unvermögen enge Fertigungstoleranzen einzuhalten, insbesondere bei Schmiede- oder Gießprozessen und bei der Ausformung von in Eingriff stehenden Oberflächen an der Haltevorrichtung eines Schars, kann übermäßig lockere Passungen, welche zum Verlust des Schars führen, oder übermäßig enge Passungen zwischen Adapter und dem Fügebereich hervorrufen, so dass die Montage des Schars hohe Kräfte erfordert. Die Probleme mit der Passung sind zunehmend größer, wenn beispielsweise ein Teil der zusammenzufügenden Komponenten zu klein und das andere Teil zu groß geraten ist. Bei den meisten erhältlichen Anordnungen ist es schwierig oder unmöglich die Kontaktflächen des Schar-Adapters zu optimieren. Da der Kontaktbereich des Schar-Adapters in erster Linie die primäre Halte- und Abstützfunktion für das Schar bereitstellt, führt ein schlechter Kontakt zu lockeren Verbindungen oder zu Schwierigkeiten bei der Montage des Schars und zu einer unzureichenden Halterungsfunktion.

Aufgrund des bei der Fertigung eingesetzten Formungsprozesses für ein Schar verformt oder erweitert sich bei vielen Aufsteck-Scharen der untere Bereich des Aufsteckbereichs, wodurch der Abstand zwischen den in Eingriff stehenden Oberflächen am unteren Bereich des Aufsteckbereichs zunimmt. Diese Erweiterung an der unteren Eingriffsfläche vergrößert das Potential für einen Scharverlust während der Feldarbeit, da Kräfte, die das Schar von dem Adapter reißen, vorwiegend im unteren Bereich des Aufsteckbereichs wirken.

Um eine optimale Haltefunktion und einen festen Sitz zu gewährleisten, müssen acht Kontaktpunkte oder vier Kontaktpaarstellen zwischen dem Adapter und der in Eingriff stehenden Oberfläche des Schars hergestellt sein. Die Verformung oder Erweiterung des Schars erfordert ein weiteres Aufschieben auf den Adapter bevor ein derartiger Achtpunkt-Kontakt hergestellt werden kann. Vertikale Unterschiede bei den Endeinstellungen an den Montagestellen können unannehmbare Unterschiede in der Eindringtiefe der Schare für das Bodenbearbeitungsgerät hervorrufen.

Die der Erfindung zu Grunde liegende Aufgabe wird darin gesehen, eine Halteeinrichtung der eingangs genannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Halteeinrichtung der eingangs genannten Art derart ausgebildet, dass der Konvergenzgrad der ersten Oberflächen unterschiedlich zu dem Konvergenzgrad der zweiten Oberflächen ist. Die ersten und zweiten Oberflächen laufen in einer der Verkeilbewegungsrichtung des Aufsteckbereichs entgegengesetzten Richtung in einem schmalen Endbereich des Verbindungsteils zusammen. Dadurch wird bewirkt, dass auf den Seiten die ersten Oberflächen unterschiedlich stark zu den zweiten Oberflächen auseinander laufen.

Bezüglich der Bewegungsrichtung des Schars beim Einsatz zur Bodenbearbeitung sind die ersten Oberflächen vorzugsweise im Wesentlichen in Richtung der oberen bzw. vorlaufenden Seite des Verbindungsteils ausgerichtet, während hingegen die zweiten Oberflächen im Wesentlichen in Richtung der unteren bzw. nachlaufenden Seite des Verbindungsteils ausgerichtet sind. Vorzugsweise ist der Konvergenzgrad der zweiten Oberflächen (unteren bzw. nachlaufenden Oberflächen) kleiner als der Konvergenzgrad der ersten Oberflächen (oberen bzw. vorlaufenden Oberflächen). Der Grad der Abstandsänderung gegenüberliegender erster Oberflächenbereiche ist größer als der von gegenüberliegenden zweiten Oberflächenbereichen, wobei die Abstände in Richtung des aufgeweiteten Bereichs der Keilverbindung zunehmen. Dadurch, dass zur Bildung eines Keilsitzes die Breite des Verbindungsteils von einem weiten Endbereich zu einem schmalen Endbereich abnimmt, nähern sich die zweiten Oberflächen bei der Kontaktherstellung zwischen den zweiten Oberflächen und einem unteren Bereich des Aufsteckbereichs mit einem geringeren Grad an.

In einer bevorzugten Ausgestaltung der Erfindung weist jede Seite des Verbindungsteils eine erste und eine zweite im Wesentlichen planare Oberfläche auf, welche durch eine Kante voneinander getrennt sind und Übergangswinkel einschließen. Dadurch, dass zur Bildung des Keilsitzes die Breite des Verbindungsteils von einem weiten Endbereich zu einem schmalen Endbereich abnimmt, laufen die zweiten Oberflächen mit einem geringeren Grad aufeinander zu als die ersten Oberflächen. Diese Übergangswinkelstruktur führt zu einer größeren effektiven Breite des Verbindungsteils am unteren schmalen Endbereich, wenn die Kontaktflächen (unteren Oberflächen) mit dem Aufsteckbereich in Eingriff treten. Die größere effektive Breite, die durch das unterschiedlich starke Aufweiten der Oberflächen in Verkeilrichtung hervorgerufen wird, stellt ein Eingreifen aller gewünschter Kontaktpunkte sicher, zu einem früheren Zeitpunkt und an vorhersehbareren Stellen, als es bei den für den Stand der Technik üblichen geradegeführten Standardkeilkonfigurationen möglich ist.

In dem dargestellten Ausführungsbeispiel ist das Verbindungsteil als Gussteil ausgebildet, um die Ausgestaltung einer Übergangswinkelstruktur zu vereinfachen. Das mit einer Übergangswinkelstruktur ausgestaltete Verbindungsteil bildet eine bessere Kontaktflächenstruktur für die Verbindung von Verbindungsteil und Schar, um die Verkeilwirkung zwischen den Kontaktflächen zu erhöhen, und ermöglicht eine bessere Anordnung von beabstandeten Kontaktpunktbereichen zur Erhöhung der Stabilität. Der verbesserte Keilsitz führt daher zu einer sichereren Haltefunktion für das Schar und zu einer festeren Verbindung zwischen Schar und Verbindungsteil. Probleme beim Aufstecken des Schars auf das Verbindungsteil und ungenaue Passungen zwischen Schar und Verbindungsteil können wesentlich reduziert oder beseitigt werden. Die Übergangswinkelstruktur des Verbindungsteils kompensiert unvorhersehbare komplexe Formverformungen die bei der Formgebung der umschließenden Oberflächen des Aufsteckbereichs des Schars entstehen. Die Ausgestaltung mit mehrteiligen Oberflächen ist insbesondere geeignet für Halteeinrichtungen von Scharen, bei denen die Schare unter Ausnutzung von beim Bodeneingriff entstehenden Kräften in eine endgültige verkeilte Montagestellung gebracht werden. Dadurch wird ermöglicht, dass die Schare ohne besonderen Kraftaufwand mit der Hand vormontiert werden können.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Seitenansicht, teilweise in Schnittdarstellung, einer unteren Schaftanordnung mit einem Schar und einer Halteeinrichtung für ein Schar,
- Fig. 2: eine perspektivische Draufsicht eines Bereiches der Schaftanordnung aus Figur 1,
- Fig. 3: eine perspektivische Seitenansicht eines mit Stufen versehenen Aufsteckbereichs des Schars aus Figur 1 und Figur 2 für ein Halteelement, wobei das Halteelement sich relativ zu dem Aufsteckbereich in einer Anfangs-Aufsteckstellung befindet,
- Fig. 4: eine Ansicht, ähnlich zu der in Figur 3 dargestellten Ansicht, wobei sich das Haltelement in einer Stellung befindet, in der ein Verkeilen bei relativ hoch eingeschobenem Schar eintritt,
- Fig. 5: eine Frontansicht der Schaftanordnung aus Fig. 1, wobei zur besseren Erkennbarkeit des Verbindungsteils ein Teil des Schars nicht dargestellt ist und
- Fig. 6: eine Ansicht zur besseren Darstellung der Oberflächenausbildung an der Halteeinrichtung.

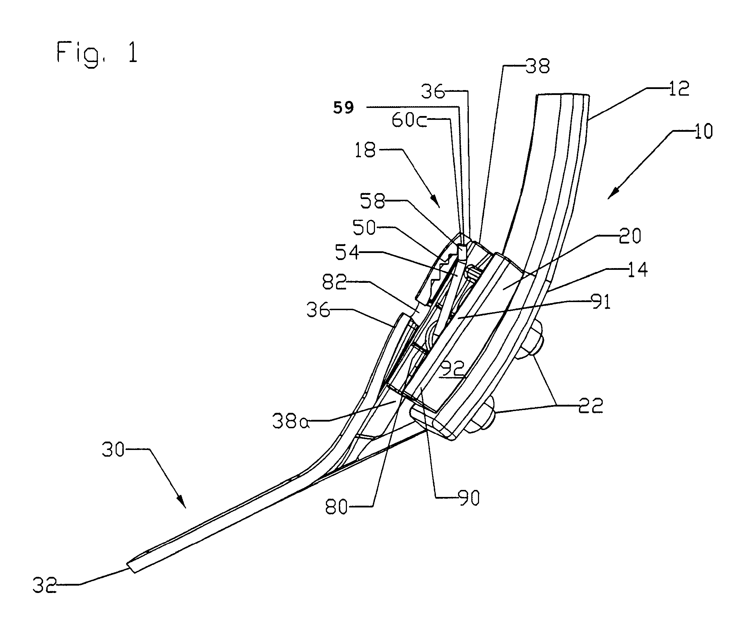

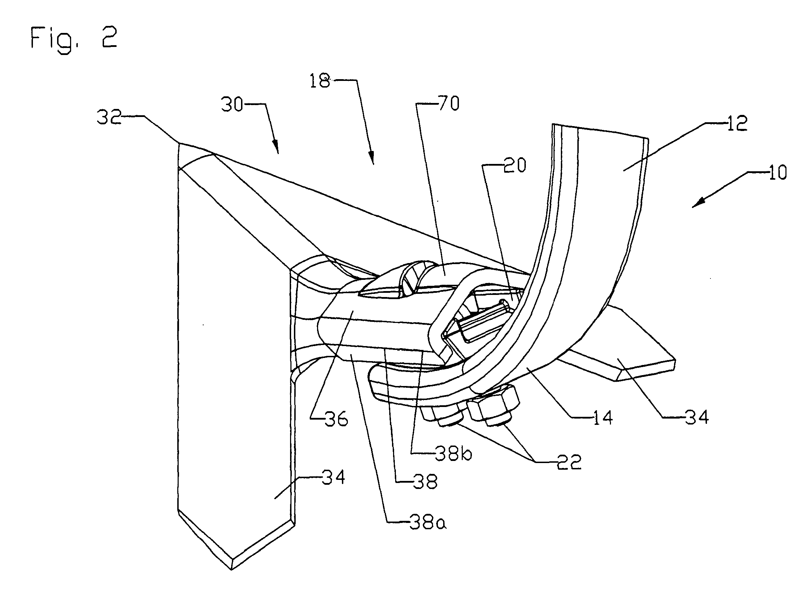

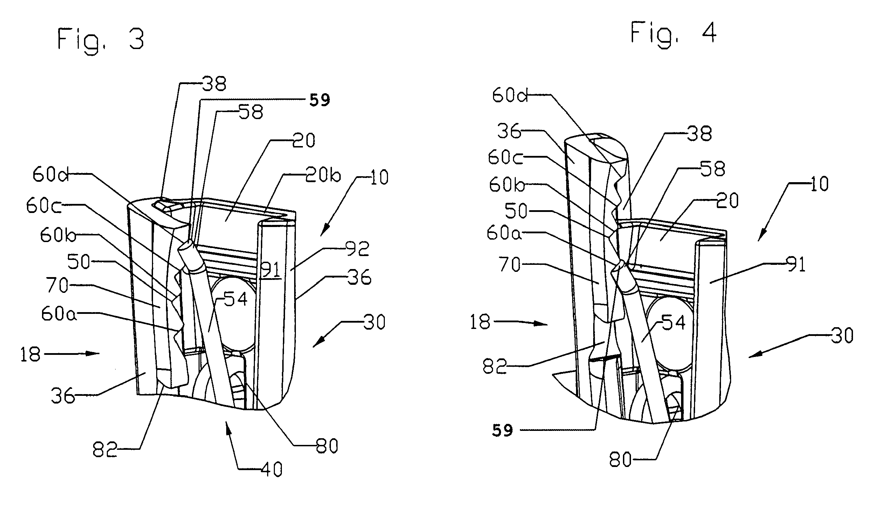

In den Figuren 1 und 2 sind der untere Bereich einer gefederten Schaftanordnung 10 dargestellt, welcher einen Schaft 12 und einen unteren Endbereich 14 zum Anbringen eines Bodenbearbeitungswerkzeugs 30 enthält, mit dem eine Aufsteck-Scharanordnung 18 gehalten wird. Die Scharanordnung 18 enthält eine keilförmig ausgebildete Adapterhalterung oder Verbindungsteil 20 für eine Schar, mit einer an die vordere Fläche des Endbereichs 14 angepassten hintere Fläche. Das Verbindungsteil 20 ist mittels zwei Befestigungsbolzen 22, welche sich durch Öffnungen in dem Verbindungsteil 20 und entsprechenden Öffnungen im Endbereich 14 des Schaftes 12 erstrecken, an den Endbereich 14 gesichert. Alternativ könnte das Verbindungsteil 20 auch als Teil des Schaftes 12 gefertigt sein.

Ein Bodenbearbeitungswerkzeug 30, in den Figuren 1 und 2 als Grubberschar dargestellt, enthält eine vordere Spitze 32 und gegenüberliegend angeordnete Flügelbereiche 34, welche in Rückwärtsrichtung auseinander divergieren. Ein nach unten und nach hinten konkav ausgebildeter Scharmontagebereich oder Aufsteckbereich 36 enthält Kanten 38, welche teilweise das Verbindungsteil 20 umgreifen. Der Aufsteckbereich 36 liefert eine Keilpassung zwischen dem Schar 30 und dem Endbereich 14 des Schafts 12, wenn das Schar 30 aufwärts auf das Verbindungsteil 20 geschoben wird. Der Aufsteckbereich 36 wird aufwärts über das Verbindungsteil 20 geschoben, und dann wird das Schar 30 nach oben und nach hinten gedrückt, um das Schar 30 in einer montierten Position auf dem Schaft 12 zu verkeilen.

Das Schar 30 wird von dem Aufsteckbereich 36 und dem Verbindungsteil 20 am Endbereich 14 eng umschlossen, ohne dass eine direkte Verbindung durch Montagebolzen für das Schar 30 erforderlich wäre. Da keine Montagebolzen für das Schar 30 vorhanden sind, können die Schare 30 schnell von dem Verbindungsteil 20 entfernt und leicht ersetzt werden. Trotzdem kann sich durch Ausfederungskräfte und dergleichen der Keilsitz während Arbeiten auf dem Feld lösen. Das Schar 30 kann auch während eines Transports verloren gehen, insbesondere wenn es vor einer Bodenbearbeitung noch nicht fest verkeilt wurde. Um einen Verlust des Bodenbearbeitungsgerätes 30 zu vermeiden, wenn der Keilsitz während der Feldarbeit oder während des Transports gelöst ist, ist eine Halteeinrichtung 40 vorgesehen. Die normalen Kräfte, die auf ein Bodenbearbeitungsgerät 30 einwirken, welches sich im Bodeneingriff befindet, neigen dazu, das Bodenbearbeitungsgerät 30 zurück in den Keilsitz oder in die montierte Position zu drängen, wenn das Bodenbearbeitungsgerät 30 nach dem ungewollten Lösen noch an dem Verbindungsteil 20 gehalten werden kann.

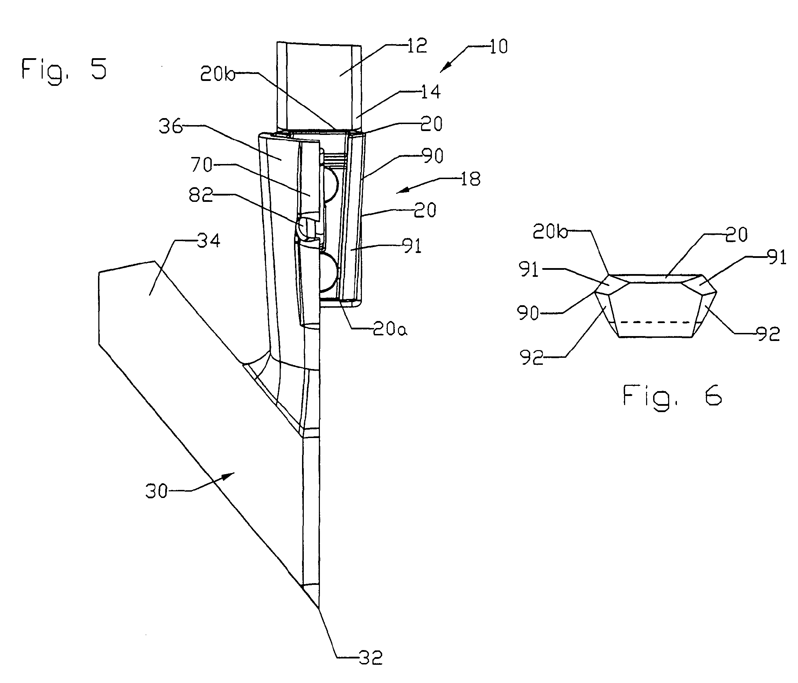

Die Halteeinrichtung 40 für das Bodenbearbeitungsgerät 30 kann im Wesentlichen wie eine in der US Patentanmeldung vom 10. Oktober 2002 mit dem Titel "Knock-on sweep strucure" (Anmeldenummer: 10/268,581) offenbarte Halteeinrichtung ausgebildet sein und weist einen länglichen Kontaktbereich 50 auf, welcher an der Unterseite des oberen Aufsteckbereichs 36 des Schars 30 oder am Befestigungsbereich positioniert ist. Ein Halteelement 54 wird von dem Verbindungsteil 20 getragen und enthält einen Kontaktendbereich 58, welcher in Vorwärtsrichtung abgewinkelt ist und über der Oberfläche oder vorderen Fläche des Verbindungsteils 20 liegt. Der Kontaktendbereich 58 enthält eine abgeflachte Kontaktfläche 59 und ist gegenüber der Unterseite des Aufsteckbereichs 36 vorgespannt. In einer Verlustsicherungsstellung, wenn sich das Schar 30 in einer montierten Position befindet, oder in einer Anfangs-Aufsteckstellung (siehe Figur 3), stößt oder liegt der Endbereich 58 dicht an einer von mehreren beabstandeten, abgeflachten Kontaktflächen 60a, 60b, 60c und 60d an. Wie in Figur 1 und 6 dargestellt ist, stößt der Endbereich 58 an eine mittige Kontaktfläche 60c. Wenn die gegebenen Toleranzen zwischen dem Aufsteckbereich 36 und dem Verbindungsteil 20 derart ausgebildet sind, dass sich ein festerer Sitz einstellt und sich das Bodenbearbeitungsgerät 30 (Schar) früher in der montierten Position auf dem Schaft 12 verkeilt (nahe der Anfangs-Aufsteckstellung aus Figur 3), dann wird der Endbereich 58 von einer Kontaktfläche 60d, die oberhalb der mittleren Kontaktfläche 60c liegt, in eine Halteposition gezwungen. Wenn die Toleranzen derart ausgebildet sind, dass der Sitz lockerer ist, dann wird das Schar 30 in eine höhere Position relativ zum Schaft 12 gebracht, so dass eine Kontaktfläche 60a (siehe Figur 4) unterhalb der Kontaktfläche 60c den Endbereich 58 zur Halterung des Schafts 12 aufnimmt. Die Oberflächen der Kontaktfläche 60c und der Kontaktfläche 59 sind im Wesentlichen parallel zueinander ausgerichtet, wenn sie in Kontakt treten. Der Kontakt bewahrt das Schar 30, aus der montierten Position wesentlich herausbewegt werden zu können, bis der Endbereich 58 in Richtung des Verbindungsteils 20 entgegen der Vorspannung bewegt wird.

Der Aufsteckbereich 36 des Schars 30 enthält einen erhöhten Bereich 70, an dessen Unterseite ein abgedeckter nutförmiger Unterseitenbereich definiert ist, in welchem das Halteelement 54 geführt und gehalten wird. Die Unterseite des erhöhten Bereichs 70 ist nach unten hin und in Rückwärtsrichtung konkav ausgebildet und in Rückwärtsrichtung zum Verbindungsteil 20 geöffnet. Die Kontaktflächen 60a bis 60d sind an der Unterseite des Bereichs 70 ausgebildet und definieren mehrere zueinander beabstandete und in eine Richtung verriegelnde Stellungen. Wie in Figur 1, 3 und 4 gezeigt ist, ist der Kontaktbereich 50 abgestuft, um die Kontaktflächen 60a bis 60d in einer abgedeckten Aussparung zu definieren, so dass Ackerboden und Verunreinigungen nicht in den Kontaktbereich 50 geraten und sich während Feldarbeiten dort anhäufen.

Sobald das Schar 30 in eine Anfangs-Aufsteckstellung auf das Verbindungsteil 20 geschoben wird, wird das Halteelement 54 heruntergedrückt und bewegt sich in den Bereich der Kontaktfläche 60d (Figur 3), um das Schar 30 locker in einer nicht-verkeilten Anfangsstellung auf dem Verbindungsteil 20 zu halten. Wenn das Schar 30 in den Ackerboden geführt wird, zwingen die auf das Schar 30 einwirkenden Kräfte das Schar in einen verkeilten Verriegelungssitz auf dem Verbindungsteil 20. Während dieser Aufwärtsbewegung, springt das Halteelement 54 und damit der Endbereich 58 in die nächstgelegene Vertiefung, wenn jede Erhöhung des abgestuften Kontaktbereichs 50 den Endbereich 58 passiert. Das Halteelement 54 liefert die Haltefunktion entgegen einer der entsprechenden Kontaktflächen 60a bis 60d, sobald das Schar 30 beginnt, sich aus der montierten Position herauszubewegen. Alternativ dazu kann das Halteelement 54 auch am Schar 30 vorgesehen sein, beispielsweise in Form einer nach unten vorgespannten Lasche oder eines Federelements.

Die oben beschriebenen Halteeinrichtungen bieten eine in eine Richtung wirkende oder rastartige Sicherungsvorkehrung mit mehreren Halterungspositionen, so dass sich die Stützposition nahe der montierten Position einstellen kann und unabhängig von den Toleranzen der Bauteile Relativbewegungen zwischen dem Schar 30 und dem Verbindungsteil 20 gering gehalten werden, wenn das Schar sich aus der vollständig montierten, verkeilten Position herausbewegt. Die Halteeinrichtung 40 erlaubt ein einfaches handbetätigtes Aufsetzen und Halten des Schars, bis die Bodenbearbeitungskräfte das Schar 30 in eine verkeilte montierte Position bringen.

Wie in den Figuren 1, 3, und 4 gezeigt ist, ist das Halteelement 54 als ein gebogener Federdraht ausgebildet, der in einem Bereich 80 an einer zentralen Stelle des Verbindungsteils 20 gelagert ist. Sobald das Schar 30 in Aufwärtsrichtung und Rückwärtsrichtung auf das Verbindungsteil 20 gesteckt wird, federt der Endbereich 58 in den nutförmigen Unterseitenbereich hinein. Wenn das Schar 30 beginnt, sich abwärts aus der verkeilten Position herauszubewegen, dann hält der Kontakt zwischen dem Endbereich 58 und der entsprechenden Kontaktfläche 60a bis 60d das Schar 30 nahe der vollständig verkeilten Position, bis die Bodenkräfte bei der Bodenbearbeitung, das Schar 30 wieder in eine verkeilte Montageposition bringen. Der nutförmige Unterseitenbereich des Bereichs 70 hält des Weiteren den Endbereich 58 des Haltelements 54 im Wesentlichen fluchtgerecht zur Drahtachse, um Biegemomente am Haltelement 54 zu vermeiden, die andernfalls auftreten würden, wenn starke Lösekräfte auf das Schar wirken, wie z. B. Ausfederungskräfte, die eine Zugwirkung auf das Schar 30 ausüben. Der gegenüberliegende erhobene Bereich auf der Oberseite des Schars 30 leitet Ackerboden außerhalb um die Halteeinrichtung 40 herum, um in diesem Bereich eine Verschleißwirkung zu begrenzen.

Um das Schar 30 herauszulösen, kann ein Werkzeug in eine Öffnung 82 im Aufsteckbereich 36 eingeführt werden, um das Haltelement 54 nach unten, aus einer Stützstellung mit den Kontaktflächen 60a bis 60d herauszubewegen. Bei heruntergedrücktem Halteelement 54, kann das Schar 30 mit einem gezielten Hammerschlag, oder mit einer anderen durch ein Trennwerkzeug hervorgerufenen abwärtsgerichteten Kraft, aus der verkeilten montierten Position auf dem Verbindungsteil 20 herausgelöst werden.

Obwohl hier ein Halteelement in Form einer Feder gezeigt ist, kann das im Folgenden beschriebene Verbindungsteil 20 selbstverständlich auch mit einer anderen Art von Halteelement 54 oder auch mit Keilanordnungen ohne zusätzlichem Halteelement versehen sein. Auch wenn hier ein keilförmiges Bodenbearbeitungswerkzeug dargestellt ist, kann ein derartiges Verbindungsteil auch bei vielen anderen Arten von austauschbaren Bodenbearbeitungswerkzeugen eingesetzt werden.

Bei der Herstellung des Schars 30 aus Stahl wandert das Material im Aufsteckbereich 36 geringfügig in Richtung des flachen Bereichs des Schars, so dass untere Bereiche oder gewünschte untere Kontaktbereiche 38a der in Eingriff stehenden Kanten 38 entsprechend gespreizt werden. Daraus resultiert, dass konventionelle gerade ausgebildete Keilkonfigurationen oftmals mit dem Aufsteckbereich 36 zuerst an oberen Kontaktbereichen 38b in Kontakt treten, so dass das Schar 30 in Aufwärtsrichtung getrieben werden muss, bevor die unteren Kontaktbereiche 38a in Kontakt treten. Die Kräfte die auf das Schar 30 einwirken und ein Abziehen des Schars 30 vom Verbindungsteil 20 hervorrufen können, wirken üblicherweise in Bereichen, die den unteren Kontaktbereichen 38a entsprechen. Sind derartige Bereiche nicht fest verkeilt, so können die Halteeigenschaften des Schars 30 beeinträchtigt sein. Des Weiteren kann die Anfangs-Aufsteckstellung bei der Montage und der verkeilte Verriegelungssitz bei Betreiben des Schars 30 auf dem Verbindungsteil 20 beträchtlich variieren. Die Kontaktbereiche 38a, 38b sind in Bezug auf die Anfangs-Aufsteckstellung des Schars 30 nahe der Eckbereiche des Verbindungsteils 20 angeordnet.

Das verbesserte keilförmige Verbindungsteil 20 oder der Adapter (Figuren 5 und 6) weist Seiten 90 mit ersten und zweiten oder oberen und unteren Oberflächen 91, 92 auf, welche ausgehend von einem unteren schmalen Endbereich 20a in einen oberen weiten Endbereich 20b des Verbindungsteils 20 divergieren. Der Konvergenzgrad vom weiten Endbereich 20b zum schmalen Endbereich 20a der zweiten Oberflächen 92 (das ist das Maß an Abstandsänderung entsprechender Punkte auf gegenüberliegenden Oberflächen 92) ist geringer als der Konvergenzgrad der ersten Oberflächen 91. Der geringere Konvergenzgrad der zweiten Oberflächen 92 bewirkt eine sichere Kontaktherstellung an den gewünschten Kontaktstellen am Verbindungsteil 20 mit den umschließenden Kanten 38 (Kontaktbereichen), wenn die Verkeilstellung hergestellt ist. Des Weiteren stellt der angrenzend zum schmalen Endbereich 20a resultierende vergrößerte Abstand zwischen den zweiten Oberflächen 92 sicher, dass eine Kontaktherstellung an oder in der Nähe von kritischen Kontaktbereichen besser aufeinander abgestimmt ist, wobei die kritischen Kontaktbereiche in der Nähe zu den Kontaktbereichen 38a und 38b und während der Anfangs-Aufsteckstellung der Kanten 38 am keilförmigen Verbindungsteil 20 (Fig. 3) in der Nähe zu auf den Oberflächen liegenden, entsprechend beabstandeten Stellen. Diese bessere Abstimmung, die durch die Unterschiede in den Konvergenzgraden resultiert, bietet einen zuverlässigeren und vorhersehbaren Mehrpunktkontakt, um die Anfangs-Handmontage, die Einstellung der Werkzeugendposition und die Haltefunktion für das Schar zu vereinfachen.

Wie in Figur 6 dargestellt ist, sind die Oberflächen 91, 92 plan ausgebildet und schließen Übergangswinkel ein. Dabei hat sich herausgestellt, dass ein zuverlässiger und wiederholbarer Mehrpunktkontakt herstellbar ist, wenn der Übergangswinkel, der von den Oberflächen 91, 92 eingeschlossen wird, auf jeder Seite in etwa 96 Grad am weiten Endbereich 20b beträgt und bis zum schmalen Endbereich 20a auf in etwa 91 Grad abnimmt und der Winkel, welcher von der zweiten Oberfläche 92 und einer senkrecht zur Ebene der zweiten Oberfläche des Verbindungsteils 20 liegenden Fläche eingeschlossen wird, von in etwa 29 Grad am weiten Endbereich 20b auf in etwa 26 Grad am schmalen Endbereich 20a abnimmt. Hierbei können jedoch auch andere Arten von Oberflächen und andere Winkelanordnungen zweckdienlich sein, wobei die oben beschriebene Ausführung lediglich ein Beispiel darstellen soll. Beispielsweise ist es möglich, einen konstanten Übergangswinkel beizubehalten und die Oberflächen 91, 92 um die an den Verbindungspunkten der Oberflächen 91, 92 gebildete Verbindungskante zu drehen, wobei die Drehung in eine Richtung erfolgt, die zu einer Verengung des Keils (Verbindungsteils 20) führt. Des Weiteren ist es auch möglich, die Oberflächen 91, 92 leicht gewölbt auszubilden um eine unterschiedliche Aufweitung zu erwirken. Obwohl die oben beschriebene Ausgestaltung eine zunehmende effektive Oberflächenbreite (Aufweitung der Oberflächen 91, 92) vom weiten Endbereich 20b in Richtung des schmalen Endbereichs 20a des Verbindungsteils 20 bewirkt, ist es auch möglich, wenn bestimmte Formgebungen für das Schar 30 und für den Aufsteckbereich 36 des Schars 30 zu einer verstärkten Aufweitung in entgegengesetzter Richtung führen, die Richtung der zunehmenden effektiven Oberflächenbreiten entgegengesetzt auszurichten, um sicherzustellen, dass die Kontaktflächen (Oberflächen 91, 92) genau mit dem Aufsteckbereich 36 in Eingriff stehen.

## Patentansprüche

1. Kombination aus Halteeinrichtung und Aufsteckwerkzeug (30), mit einem Verbindungsteil (20) an der Halteeinrichtung, welches keilförmig zusammenlaufende Seiten (90) aufweist, und mit einem auf das Verbindungsteil (20) aufsteckbaren wenigstens teilweise die Seiten (90) des Verbindungsteils (20) umschließenden Aufsteckbereich (36) am Aufsteckwerkzeug, wobei die Seiten (90) jeweils mit einer ersten und einer zweiten Oberfläche (91, 92) versehen sind, welche in der Längsrichtung der zusammenlaufenden Seiten (90) des schmaleren Endbereichs (20a) des Verbindungsteils (20) konvergieren, **dadurch gekennzeichnet, dass** der Konvergenzgrad der ersten Oberflächen (91) unterschiedlich zu dem Konvergenzgrad der zweiten Oberflächen (92) ist.

2. Halteeinrichtung nach Anspruch 1, **dadurch gekennzeichnet, dass** der Konvergenzgrad der zweiten Oberflächen (92) kleiner als der Konvergenzgrad der ersten Oberflächen (91) ist.

3. Halteeinrichtung nach Anspruch 1 oder 2, **dadurch gekennzeichnet, dass** die ersten und zweiten Oberflächen (91, 92) im Wesentlichen plan ausgebildet sind und an Verbindungsstellen Übergangswinkel einschließen.

4. Halteeinrichtung nach einem der vorhergehenden Ansprüche, **dadurch gekennzeichnet, dass** ein am Verbindungsteil (20) befestigtes Halteelement (54) enthalten ist, welches in eine für den Aufsteckbereich (36) eingerichtete Schließstellung vorspannbar ist, um das Aufsteckwerkzeug (30) in einer Anfangs-Aufsteckstellung zu halten.

5. Halteeinrichtung nach Anspruch 4, **dadurch gekennzeichnet, dass** der Aufsteckbereich (36) einen mit beabstandeten Kontaktflächen (60, 60a, 60b, 60c, 60d) versehenen Haltebereich aufweist und das Haltelement (54) des Verbindungsteils (20) in einer lockeren Anfangs-Montagestellung des Aufsteckbereichs (36) mit einer der Kontaktflächen (60, 60a, 60b, 60c, 60d) in Eingriff tritt.

6. Halteeinrichtung nach Anspruch 5, **dadurch gekennzeichnet, dass** das Halteelement (54) als Federelement ausgebildet ist, welches mit einem Kontaktendbereich (58) gegenüber den Kontaktflächen (60, 60a, 60b, 60c, 60d) vorspannbar ist.

7. Halteeinrichtung nach einem der Ansprüche 4 bis 6, **dadurch gekennzeichnet, dass** das Halteelement (54) als Draht ausgebildet ist und der Aufsteckbereich (36) einen kanalförmigen Unterseitenbereich aufweist, durch den der Draht abstützbar ist.

8. Halteeinrichtung nach einem der Ansprüche 5 bis 7, **dadurch gekennzeichnet, dass** die Kontaktflächen (60, 60a, 60b, 60c, 60d) durch im Haltebereich ausgeformte Stufen ausgebildet sind.

9. Halteeinrichtung nach einem der Ansprüche 6 bis 8, **dadurch gekennzeichnet, dass** der Kontaktendbereich (58) ebenflächig und die im Haltebereich ausgebildeten Kontaktflächen (60, 60a, 60b, 60c, 60d) im Wesentlichen parallel zu dem Kontaktendbereich (58) ausgebildet sind.

## Claims

1. A combination of a support device and a plug on tool (30), with a connecting part (20) on the support device having sides (90) converging in a wedge shape, and with a plug on region (36) on the plug on tool which can be plugged on to the connecting part (20), at least partially surrounding the sides (90) of the connecting part (20), wherein the sides (90) are each provided with first and second surfaces (91, 92) which converge in the longitudinal direction of the converging sides (90) of the narrower end region (20a) of the connecting part (20), **characterized in that** the degree of convergence of the first surfaces (91) is different from the degree of convergence of the second surfaces (92).

2. A support device according to claim 1, **characterized in that** the degree of convergence of the second surfaces (92) is smaller than the degree of convergence of the first surfaces (91).

3. A support device according to claim 1 or 2, **characterized in that** the first and second surfaces (91, 92) are formed substantially flat and subtend a transition angle at connecting places.

4. A support device according to any of the preceding claims, **characterized in that** a retaining element (54) fixed on the connecting part (20) is included and can be pre-stressed into a locking closed position adapted to the plug on region (36), in order to retain the plug on tool (30) in an initial plug on position.

5. A support device according to claim 4, **characterized in that** the plug on region (36) comprises a retaining region provided with spaced contact surfaces (60, 60a, 60b, 60c, 60d) and the retaining element (54) of the connecting part (20) enters into engagement with one of the contact surfaces (60, 60a, 60b, 60c, 60d) in a loose initial fitting position of the plug on region (36).

6. A support device according to claim 5, **characterized in that** the retaining element (54) is formed as a spring element which can be pre-stressed by a contact end region (58) opposed to the contact surfaces (60, 60a, 60b, 60c, 60d).

7. A support device according to any of claims 4 to 6, **characterized in that** the retaining element (54) is formed from wire and the plug on region (36) comprises an underside region of channel form through which the wire can be supported.

8. A support device according to any of claims 5 to 7, **characterized in that** the contact surfaces (60, 60a, 60b, 60c, 60d) are formed by steps formed in the retaining region.

9. A support device according to any of claims 6 to 8, **characterized in that** the contact end region (58) is flat and the contact surfaces (60, 60a, 60b, 60c, 60d) formed in the retaining region are formed substantially parallel to the contact end region (58).

## Revendications

1. Combinaison formée d'un dispositif de fixation et d'un outil à rapporter (30), comportant un élément d'assemblage (20) sur le dispositif de fixation, lequel comporte des faces (90) convergeant en forme de cône, et comportant une zone d'emboîtement (36) sur l'outil à rapporter (30), laquelle peut être emmanchée sur l'élément d'assemblage (20) et entoure au moins partiellement les faces (90) de l'élément d'assemblage (20), les faces (90) étant munies chacune d'une première et d'une deuxième surface (91, 92), qui convergent dans le sens longitudinal des faces (90) convergentes de la zone d'extrémité plus étroite (20a) de l'élément d'assemblage (20), **caractérisée en ce que** le degré de convergence des premières surfaces (91) est différent du degré de convergence des deuxièmes surfaces (92).

2. Dispositif de fixation selon la revendication 1, **caractérisé en ce que** le degré de convergence des deuxièmes surfaces (92) est plus petit que le degré de convergence des premières surfaces (91).

3. Dispositif de fixation selon la revendication 1 ou 2, **caractérisé en ce que** les premières et les deuxièmes surfaces (91, 92) sont sensiblement planes et forment un angle de transition au niveau des zones d'assemblage.

4. Dispositif de fixation selon l'une quelconque des revendications précédentes, **caractérisé en ce qu'**il contient un élément de fixation (54), qui est fixé contre l'élément d'assemblage (20) et qui peut être précontraint dans une position de fermeture prévue pour la zone d'emboîtement (36), afin de maintenir l'outil à rapporter (30) dans une position emboîtée initiale.

5. Dispositif de fixation selon la revendication 4, **caractérisé en ce que** la zone d'emboîtement (36) comporte une zone de fixation munie de surfaces de contact (60, 60a, 60b, 60c, 60d) à distance les unes des autres, et l'élément de fixation (54) de l'élément d'assemblage (20), dans une position de montage initiale desserrée de la zone d'emboîtement (36), entre en prise avec une des surfaces de contact (60, 60a, 60b, 60c, 60d).

6. Dispositif de fixation selon la revendication 5, **caractérisé en ce que** l'élément de fixation (54) est conçu sous forme de ressort, qui peut être précontraint avec une zone d'extrémité de contact (58) par rapport aux surfaces de contact (60, 60a, 60b, 60c, 60d).

7. Dispositif de fixation selon l'une quelconque des revendications 4 à 6, **caractérisé en ce que** l'élément de fixation (54) est réalisé sous forme de fil, et la zone d'emboîtement (36) comporte une zone de face inférieure en forme de conduit, par laquelle le fil est mis en appui.

8. Dispositif de fixation selon l'une quelconque des revendications 5 à 7, **caractérisé en ce que** les surfaces de contact (60, 60a, 60b, 60c, 60d) sont formées par des décrochements formés dans la zone de fixation.

9. Dispositif de fixation selon l'une quelconque des revendications 6 à 8, **caractérisé en ce que** la zone d'extrémité de contact (58) est plane et les surfaces de contact (60, 60a, 60b, 60c, 60d) réalisées dans la zone de fixation sont sensiblement parallèles à la zone d'extrémité de contact (58).
